# EUROPEAN PATENT APPLICATION

(11) **EP 4 183 259 A1**
(43) Date of publication of application: **24.05.2023**
(21) Application number: 21841273.2
(22) Date of filing: 10.06.2021
(51) Int. Cl.: A23G 1/36

(54) **METHOD FOR REDUCING AMOUNT OF SUGAR USED IN CHOCOLATE**

(30) Priority: 17.07.2020 JP 2020122690
(71) Applicant: Fuji Oil Holdings Inc., Izumisano-shi, Osaka 598-8540 (JP)
(72) Inventor: HE, MOGENG, Izumisano-shi, Osaka 598-8540 (JP)
(74) Representative: Becker, Eberhard
(86) International application number: PCT/JP2021/022094
(87) International publication number: WO 2022/014213

(57) **Abstract**

The present invention addresses the problem of providing a method for enhancing the sweetness of sugar in chocolate that contains a prescribed amount of sugar, to thereby reduce the amount of sugar used. Upon thoroughly investigating a resolution to the abovementioned problem, the inventors discovered that incorporating a prescribed amount of phosphatidyl choline in chocolate that contains a prescribed amount of sugar makes it possible to enhance the sweetness of the sugar, resultantly making it possible to reduce the amount of sugar used, whereupon the inventors perfected the present invention.

## Description

### [Technical Field]

The present invention relates to a method for reducing an amount of sugar used in chocolate.

### [Background Art]

Various compounds have been disclosed as sweetness potentiators. For example, Patent Literature 1 discloses a compound having a prescribed structure as a sweetness potentiator.

In Patent Literature 2, as a surfactant additive that improves sweetness when used in combination with a sweetness potentiator having a prescribed structure, the following examples are disclosed: polysorbate (for example, polyoxyethylene sorbitan monooleate (polysorbate 80), polysorbate 20, polysorbate 60), sodium dodecylbenzenesulfonate, dioctyl sulfosuccinate or dioctyl sodium sulfosuccinate, sodium dodecyl sulfate, cetylpyridinium chloride (hexadecylpyridinium chloride), hexadecyltrimethylammonium bromide, sodium cholate, carbamoyl, choline chloride, sodium glycocholate, sodium taurodeoxycholate, lauryl alginate, sodium stearoyl lactylate, sodium taurocholate, lecithin, sucrose oleate ester, sucrose stearate esters, sucrose palmitate esters, and sucrose laurate.

Patent Literature 3 discloses a palate-enhancing compound containing a taste-enhancing compound and choline chloride.

Patent Literature 4 discloses "low-calorie chocolate with an improved texture characterized by using Palatinit and highly hygroscopic sugar as carbohydrates, and lecithin and lipophilic emulsifiers other than lecithin as emulsifiers."

### [Citation List]

### [Patent Literature]

[Patent Literature 1]
   Published Japanese Translation No. 2017-532027 of the PCT International Publication
[Patent Literature 2]
   Published Japanese Translation No. 2010-527611 of the PCT International Publication
[Patent Literature 3]
   Published Japanese Translation No. 2013-537039 of the PCT International Publication
[Patent Literature 4]
   Japanese Patent Laid-Open No. H7-132047

### [Summary of Invention]

### [Technical Problem]

An objective of the present invention is to provide a method for reducing an amount of sugar used in chocolate containing a prescribed amount of sugar by enhancing the sweetness of the sugar in the chocolate.

### [Solution to Problem]

The inventor of the present invention diligently studied to achieve the above objective.

In Patent Literature 1, a prescribed compound is required to be used as a sweetness potentiator, and there may be restrictions on a formulation.

Also in Patent Literature 2, a prescribed compound is required to be used to enhance sweetness, and a very large number of types of surfactant additives that improve sweetness are disclosed as examples, but it cannot be said that some kind of substantial information is disclosed, and thus Patent Literature 2 could not be used as a reference.

In Patent Literature 3, choline is required to be used in the form of a chloride salt, which is complicated.

In Patent Literature 4, it is indispensable to use Palatinit as a carbohydrate, and there may be restrictions on a formulation.

Upon further studying to achieve the objective, the inventor of the present invention discovered that incorporating a prescribed amount of phosphatidylcholine in chocolate that contains a prescribed amount of sugar makes it possible to enhance the sweetness of the sugar, resultantly making it possible to reduce the amount of sugar used, whereupon the inventor perfected the present invention.

That is, the present invention relates to:
(1) A method for reducing an amount of sugar used in chocolate, in which chocolate containing 2% to 30% by mass of sugar contains 0.01% to 0.65% by mass of phosphatidylcholine.
(2) Chocolate containing: 0.01% to 0.65% by mass of phosphatidylcholine; and 2% to 30% by mass of sugar.
(3) A method for producing chocolate, in which the chocolate contains 2% to 30% by mass of sugar and contains 0.01% to 0.65% by mass of phosphatidylcholine.

### [Advantageous Effects of Invention]

According to the present invention, the amount of sugar used in chocolate can be reduced by a simple method.

### [Description of Embodiments]

The term "chocolate" in the present invention is a food made by mixing sugar, cocoa butter, powdered milk, and the like with cocoa mass as a main raw material obtained by fermenting and roasting cocoa seeds, and hardening the mixture by kneading. Furthermore, in the present invention, chocolate is also used as a generic term for chocolate formed using oils and fats other than cocoa butter and so-called white chocolate containing almost no cocoa content.

In the present invention, phosphatidylcholine (hereinafter sometimes abbreviated as PC) is a generic term for phospholipids having a structure in which choline is phosphate ester-bonded as a hydrophilic part of a glycerophospholipid, and two fatty acids are ester-bonded to a glycerol skeleton as a hydrophobic part. Furthermore, in the present invention, phosphatidylcholine is also used as a generic term for substances that have become lysolecithin due to enzymatic degradation.

In the present invention, the amount of sugar used can be reduced in chocolate. That is, even when the amount of sugar is reduced, the sweetness of the sugar contained in a prescribed amount can be enhanced.

In chocolate, sugar serves both as a sweetening agent and a body agent. That is, in chocolate, sugar is a material that exhibits sweetness and is also a material that occupies a certain amount of mass and volume. In addition, it is a material that has a considerable influence on the texture of chocolate. The above-mentioned term body agent is a term that describes such properties of sugar.

For example, even when the same sweetness as sugar can be expressed by another material (hereinafter referred to as material A), when a required amount of the material A is smaller than sugar, merely replacing the material A with sugar will result in collapse of formulation balance in chocolate. Therefore, materials with physical properties similar to those of sugar in chocolate are required. In such a case, a material that has little influence on sweetness and has physical properties similar to those of sugar is required as the body agent.

However, the present invention relates to a method for enhancing the sweetness exhibited by sugar, and the type of the body agent is not limited. Examples of possible materials include various types of carbohydrates and proteins. Examples of carbohydrates include milk sugar, sugar alcohols, and water-soluble dietary fibers. Examples of proteins include vegetable protein materials and milk protein materials. It is needless to say that digestible carbohydrate materials cannot be used when there is an intention to limit carbohydrates in chocolate to be prepared.

Examples of preferable body agents derived from Examples of the present invention include sugar alcohols and water-soluble dietary fibers, and one or more selected from maltitol as a sugar alcohol and inulin as a water-soluble dietary fiber are desirably used, of which inulin is more desirable. In principle, the amount thereof is the amount that supplements the reduced sugar, and is desirably 10% to 44% by mass, and more desirably 15% to 40% by mass.

The present invention is characterized in that the amount of sugar used can be reduced by enhancing sweetness.

That is, the present invention can reduce the amount of sugar used by enhancing the sweetness of the reduced amount of sugar instead of adding a high-intensity sweetener other than sugar. Therefore, although it can be said that a reduction is possible in the present invention, chocolate is required to contain 2% to 30% by mass of sugar. This amount is more desirably 4% to 25% by mass, and more desirably 15% to 22% by mass. Even when the amount of sugar is suitable and the amount of sugar is reduced, chocolate with sufficient sweetness can be obtained.

The amount of sugar in ordinary chocolate is about 35% to 45% by mass, but in the present invention, with a smaller amount of sugar, the same sweetness as in the case of adding a usual amount of sugar can be felt.

Furthermore, in the present invention, examples of high-intensity sweeteners include sucralose, aspartame, and stevia, and not using one or more selected from these is also a characteristic of the present invention.

Lecithin containing phosphatidylcholine is a material that has conventionally been used in chocolate. However, it has not been recognized that the use of lecithin in chocolate in which a usual amount of sugar is present tends to significantly increase the sweetness. That is, the present invention is the invention based on the finding of the effect of being capable of enhancing sweetness in chocolate with a reduced amount of sugar using lecithin.

In the present invention, chocolate is required to contain 0.01% to 0.65% by mass of PC. This amount is more desirably 0.04% to 0.6% by mass, and more desirably 0.07% to 0.5% by mass. An effect of enhancing suitable sweetness can be obtained by a suitable amount of PC.

PC is contained in lecithin, and the formulation amount of general lecithin in chocolate is 0.5% to 2% by mass, but this amount can be changed according to the amount of PC contained in PC. The formulation amount herein is an amount that is added to a chocolate formulation.

PC according to the present invention can be added as lecithin as described above. Examples of types of lecithin include general soybean lecithin and also include sunflower lecithin, rapeseed lecithin, and egg yolk lecithin, of which soybean lecithin is most desirable. In addition, lecithin that has been appropriately purified, fractionated, and enzymatically degraded can be used.

A more specific method will be described below.

First, the formulation is set. The formulation is set such that the amount of sugar used is about half of the usual amount. A body agent in an amount same as the amount of reduced sugar is appropriately set. Herein, the description will proceed with a water-soluble dietary fiber as an example.

According to the formulation, chocolate is prepared. Herein, the water-soluble dietary fiber is prepared by adding in the same manner as sugar.

PC is desirably added at the same time as in ordinary chocolate. That is, adding is desirably performed in the kneading or the second stage of conching. Thereafter, tempering is performed, and pouring into a mold is performed for molding.

Hereinafter, the embodiment of the invention will be described in more detail with reference to examples.

### Examples

### Study 1

Chocolate was prepared according to the formulation in Table 1-1. A method for preparing chocolate was performed according to a "o Chocolate preparation method."

The obtained chocolate was subjected to a sensory test. The method was performed according to a "o Chocolate sensory test method."

The obtained sweetness evaluation results are shown at the bottom part of Table 1-1.

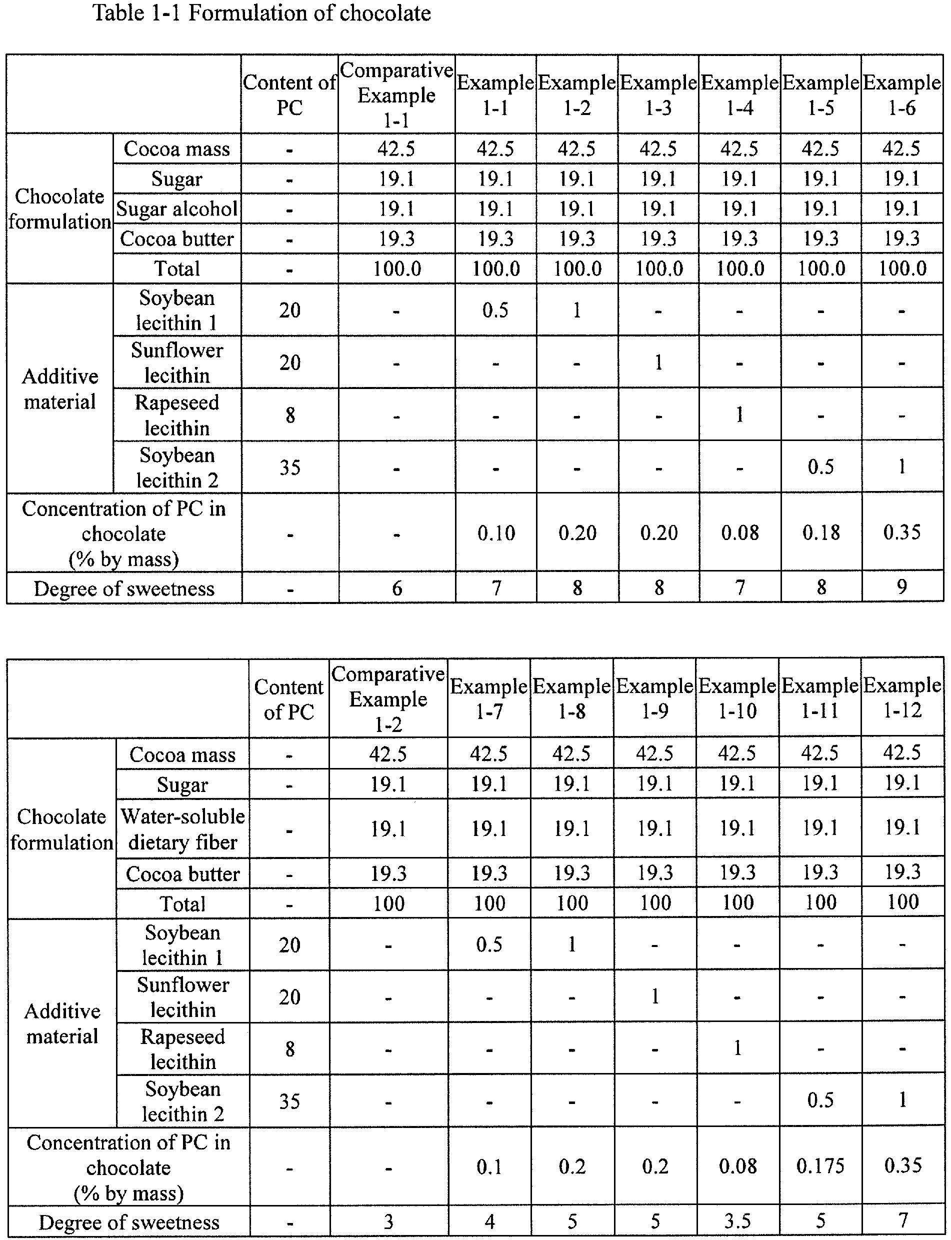

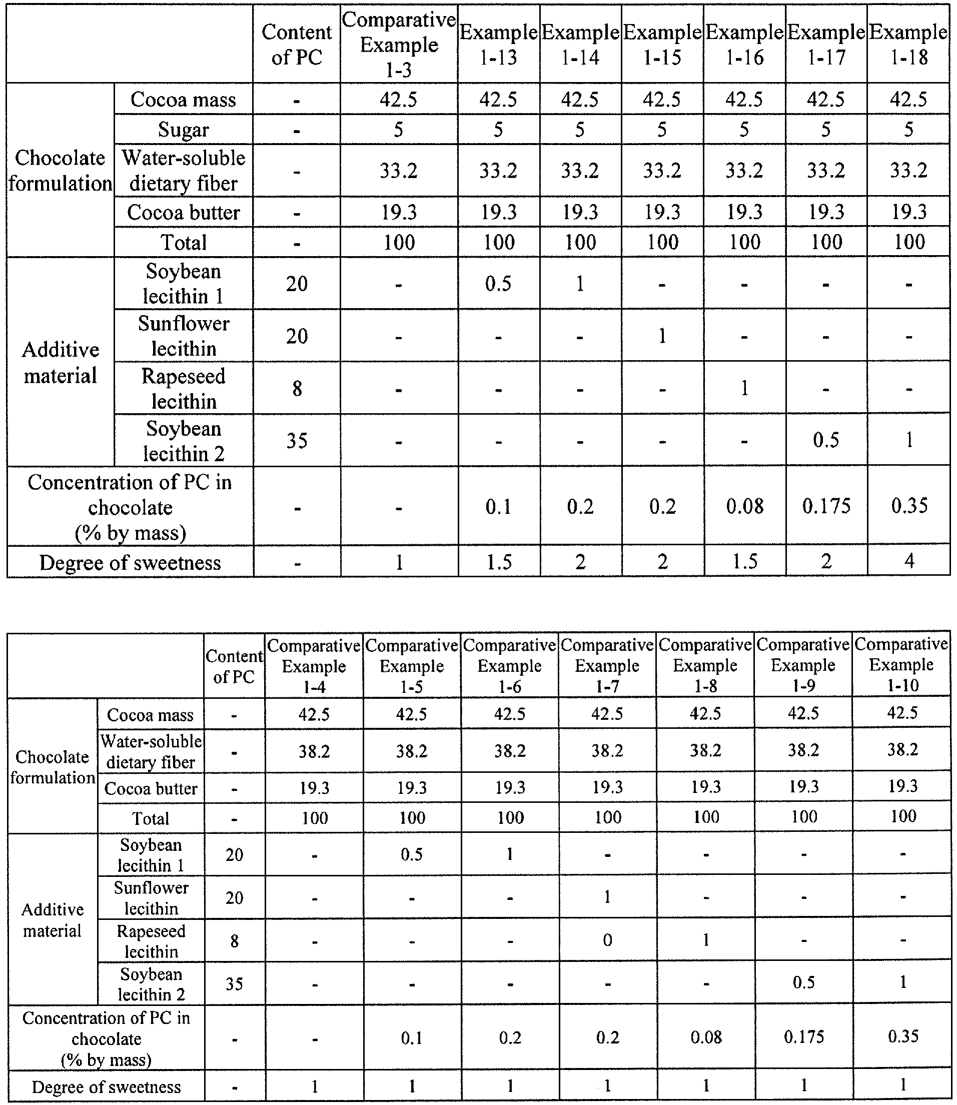

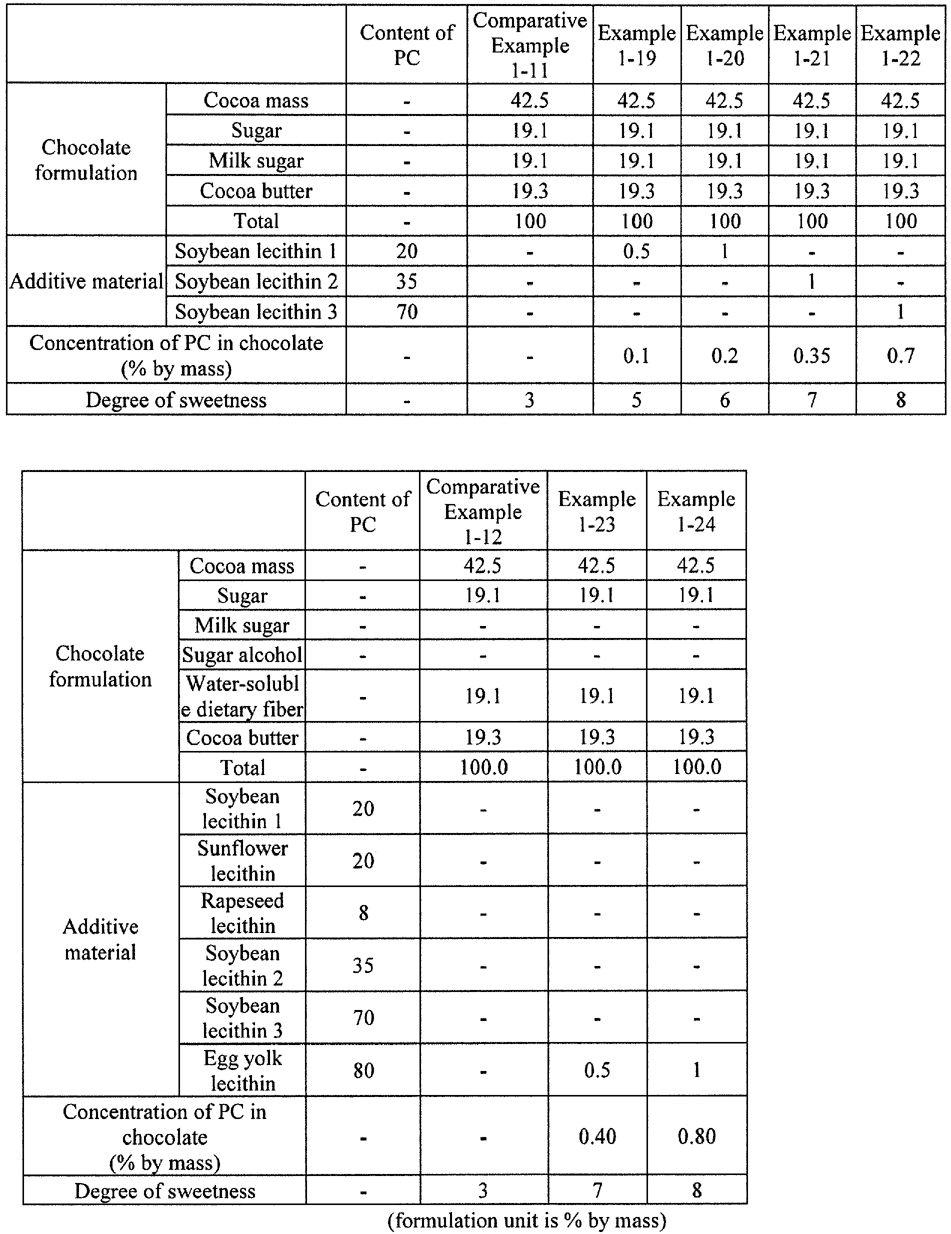

· For the formulation, with a portion of the chocolate formulation as 100%, lecithin was added thereto.
· For cocoa mass, "GB100" manufactured by FUJI OIL CO., LTD. was used.
· For cocoa butter, "GO201" manufactured by FUJI OIL CO., LTD. was used.
· For a sugar alcohol, "LESYS" which is maltitol manufactured by Mitsubishi Corporation Life Sciences Limited. was used. It is known that the degree of sweetness of maltitol is 70% to 80% of that of sugar.
• For water-soluble dietary fibers, "Fuji FF" which is inulin manufactured by Fuji Nihon Seito Corporation was used. It is known that the degree of sweetness of inulin is 20% or less of that of sugar.
• For soybean lecithin 1, "SLP-Paste" which is soybean lecithin manufactured by Tsuji Oil Mills Co., Ltd. was used.
· For sunflower lecithin, "SLP-Paste SF" which is sunflower lecithin manufactured by Tsuji Oil Mills Co., Ltd. was used.
· For rapeseed lecithin, "SLP-Rapeseed Paste Lecithin Formulation" which is rapeseed lecithin manufactured by Tsuji Oil Mills Co., Ltd. was used.
· For soybean lecithin 2, "SLP-PC35" which is fractionated soybean lecithin manufactured by Tsuji Oil Mills Co., Ltd. was used.
· For soybean lecithin 3, "SLP-PC70" which is fractionated soybean lecithin manufactured by Tsuji Oil Mills Co., Ltd. was used.
• For egg yolk lecithin, "PL-100M" which is egg yolk lecithin manufactured by Kewpie Corporation was used.

### o Chocolate preparation method

1. In the chocolate formulation, raw materials other than cocoa butter and lecithin were mixed with a kneader and homogenized.
2. The raw materials homogenized in 1 was ground with a roll refiner.
3. The raw materials ground in 2 was conched with a conche.
4. After the conching in 3, cocoa butter and lecithin were added and further homogenized with a conche.
5. After performing tempering, molding was performed.

### o Chocolate sensory test method

Chocolate as a control (hereinafter simply referred to as "control chocolate") was prepared according to the "Chocolate preparation method" with the formulation shown in Table 1-2. The chocolate to be provided for tasting was left to stand at room temperature for 1 hour or longer before tasting.

Each sample was eaten by 5 panelists who have been usually involved in test production of chocolate to score the degree of sweetness of each sample by consultation using the following grade list as a reference with the sweetness of the control chocolate as 10 points and a state in which almost no sweetness was felt as 1 point.

In each chocolate formulation, using a formulation without addition of lecithin as a standard value in each formulation, when the degree of sweetness exceeded the standard value by adding each lecithin, this was determined to be acceptable.

The following grade list was used as determination indexes.
11 points: one in which more sweetness than the control chocolate was felt.
10 points: one in which the same sweetness as that of the control chocolate was felt.
7 points: one in which approximately 70% of sweetness of the control chocolate was felt.
5 points: one in which approximately 50% of sweetness of the control chocolate was felt.
3 points: one in which approximately 30% of sweetness of the control chocolate was felt.
1 point: one in which almost no sweetness was felt.

Scores without the determination indexes were inferred from the upper and lower determination indexes.

**Table 1-2 Formulation of control chocolate**

| | |
|---|---|
| Cocoa mass | 42.5 |
| Sugar | 38.2 |
| Cocoa butter | 19.3 |
| Total | 100.0 |

| | |
|---|---|
| (formulation unit is % by mass) | |

### Results and discussion

· In Comparative Example 1-1, the sweetness evaluation was 6 points with a formulation containing sugar and a sugar alcohol. On the other hand, in Examples 1-1 to 1-6, when various types of lecithin were added so that PC in the chocolate reached a prescribed value, the sweetness of each case was increased, confirming the effect thereof. In particular, when fractionated soybean lecithin was used to set PC to 0.35%, the degree of sweetness was shown to be comparable to that of the control chocolate.
• In Comparative Example 1-2, the sweetness evaluation was 3 points with a formulation containing sugar and water-soluble dietary fibers. On the other hand, in Examples 1-7 to 1-12, when various types of lecithin were added so that PC in the chocolate reached a prescribed value, the sweetness of each case was increased, confirming the effect thereof. In particular, when fractionated soybean lecithin was used to set PC to 0.35%, the degree of sweetness was evaluated to be 7 points.
· In Comparative Example 1-3, the sweetness evaluation was 1 point with a formulation containing a small amount of sugar and water-soluble dietary fibers. On the other hand, in Examples 1-13 to 1-18, when various types of lecithin were added so that PC in the chocolate reached a prescribed value, the sweetness of each case was increased, confirming the effect thereof. In particular, when fractionated soybean lecithin was used to set PC to 0.35%, the degree of sweetness was evaluated to be 4 points.

· Comparative Examples 1-4 to 1-10 were chocolates in which sugar had not been blended, but water-soluble dietary fibers were blended in and lecithin was added. As a result, the degree of sweetness was 1 point in any case. It was confirmed that, in a state without sugar, merely setting PC to a prescribed value did not lead to an effect of enhancing sweetness.
· In Comparative Example 1-11, the sweetness evaluation was 3 points with a formulation containing sugar and milk sugar. On the other hand, in Examples 1-19 to 1-22, when various types of lecithin were added so that PC in the chocolate reached a prescribed value, the sweetness of each case was increased, confirming the effect thereof. In particular, when fractionated soybean lecithin 3 was used to set PC to 0.7%, the degree of sweetness was evaluated to be 8 points.
· In Comparative Example 1-12, the sweetness evaluation was 3 points with a formulation containing sugar and water-soluble dietary fibers. On the other hand, in Examples 1-23 and 1-24, when egg yolk lecithin was added so that PC in the chocolate reached a prescribed value, the sweetness was increased, confirming the effect thereof.

Study 2 Verification of effect of adding PC in ordinary chocolate formulation

It was verified whether the effect of enhancing the sweetness of sugar by PC was confirmed in chocolate containing a general amount of sugar.

Each sample was prepared according to the "o Chocolate preparation method" with the formulation in Table 2-1. The obtained samples were evaluated according to the "o Chocolate sensory test method," and the results are shown at the bottom part of Table 2-1.

**Table 2-1 Formulation**

| | | Content of PC | Comparative Example 2-1 | Comparative Example 2-2 | Comparative Example 2-3 |
|---|---|---|---|---|---|
| Chocolate formulation | Cocoa mass | - | 42.5 | 42.5 | 42.5 |
| | Sugar | - | 38.2 | 38.2 | 38.2 |
| | Cocoa butter | - | 19.3 | 19.3 | 19.3 |
| | Total | - | 100.0 | 100.0 | 100.0 |
| Additive formulation | Soybean lecithin 2 | 35 | - | 0.4 | 1 |
| Concentration of PC in chocolate (% by mass) | | - | 0 | 0.2 | 0.4 |
| Degree of sweetness | | - | 10 | 10 | 10 |

| | | | | | |
|---|---|---|---|---|---|
| (formulation unit is % by mass) | | | | | |

### Discussion

· Comparative Example 2-1 was a general chocolate not containing lecithin, and the degree of sweetness thereof was 10. Even when lecithin was added in this state to set PC to a prescribed value, the sweetness was not felt stronger, and the evaluation of the degree of sweetness did not change. That is, it was confirmed that the effect of enhancing the degree of sweetness of sugar by PC is a phenomenon observed when a prescribed amount of sugar is blended.

## Claims

1. A method for reducing an amount of sugar used in chocolate, wherein chocolate containing 2% to 30% by mass of sugar contains 0.01% to 0.65% by mass of phosphatidylcholine.

2. Chocolate comprising:
0.01% to 0.65% by mass of phosphatidylcholine; and
2% to 30% by mass of sugar.

3. A method for producing chocolate, wherein the chocolate contains 2% to 30% by mass of sugar and contains 0.01% to 0.65% by mass of phosphatidylcholine.
